# EUROPEAN PATENT SPECIFICATION

(11) **EP 0 607 323 B1**
(45) Date of publication and mention of the grant of the patent: **08.07.1998**
(21) Application number: 92922038.2
(22) Date of filing: 05.10.1992
(51) Int. Cl.: G06K 9/00

(54) **MEASURING PICTURE QUALITY USING OPTICAL PATTERN RECOGNITION**
MESSUNG DER BILDQUALITÄT MIT OPTISCHER MUSTERERKENNUNG
EVALUATION DE LA QUALITE D'UNE IMAGE AU MOYEN D'UNE RECONNAISSANCE OPTIQUE DES STRUCTURES

(30) Priority: 07.10.1991 SE 9102892
(43) Date of publication of application: 27.07.1994
(73) Proprietor: TELIA AB, 123 86 Farsta (SE)
(72) Inventor: FENG, Yingduo, S-183 92 Täby (SE); ÖSTBERG, Olov, S-111 31 Stockholm (SE)
(74) Representative: Akerman, Marten Lennart
(86) International application number: SE9200695
(87) International publication number: WO9307581

(56) References cited:
- EP-A- 461 793

## Description

### FIELD OF THE INVENTION

The present invention relates to a method as claimed in preamble of claim 1.

The expression characterization of picture quality means that the picture quality is described with objective measures, such as the likelihood of a person confusing an intended character with another character within a character set system, the degree of accuracy in reproducing a grey scale gradient, the signal/noise ratio, MTFA (Modulation Transfer Function Area) value, the likelihood of considering the overall picture quality of a given application acceptable, etc.

The term visual pictures and documents relates to visual information presented on information carriers in the form of e.g. paper documents, films, electrooptical displays.

The term optical pattern recognition relates to an electrooptical system designed to determine automatically the presence of specific picture elements.

### STATE OF THE ART

Examples of known prior art of this type is optical character recognition (OCR), which is designed to recognize automatically alphanumerical characters (combinations of horizontal, vertical and slanted lines, closed and open curves, etc.). If the character in question is not alphanumerical (but e.g. consists of EAN codes) this method is usually called Optical Mark Recognition (OMR).

In certain applications the pattern recognition may be "absolute" in that the pattern in question is standardized, which is the case in traditional OCR for alphanumerical characters. In other applications it may be required that the pattern recognition is "relative", which means that the pattern recognition is relative to an ideal test picture specially designed for the application.

The OCR and OMR technique is based on a computer program designed to optimize the likelihood of classifying correctly an input character. This automatic character recognition requires that the input characters are of a certain miniumum quality. They are not intended for operation with texts of lower quality, since it has been found that if the recognition level is lower than approximately 90-95 % a too great manual supplementary work is required and, therefore, it is better to perform the whole character recognition (reading) manually.

So far, no one has used this technique of optical recognition to develop this for a measuring device for picture quality. No one has used the recognition degree, which may vary between 0 and 100 %, as an objective measure of picture quality. No one has used a test pattern containing a text and a graphic picture as a basis for OCR/OMR measurement of picture quality.

Another example of prior art of this type is disclosed in the document EP-A-0 461 793. This document discloses a method for generating a set of defective images from a model image. Defect parameters used with the apparatus and methods specify classes of defects including resolution blur, threshold, speckle, jitter, skew, distortion of width and height, offset from a baseline, and kerning. The parameters further permit specification of a range of size of the defects and a distribution of the defects within the range. Within the apparatus, actual values for the defects are generated randomly within the specified ranges and distributions. The model image may be represented by means of pixels or by a format which describes the model image's shape. The user may specify the number and the size of the defective images. The defective images are useful for inferring accurate and efficient image classifiers for use in image recognition devices such as optical character readers.

### SUMMARY OF THE INVENTION

The present invention provides a method as claimed in claim 1. The recognition equipment (e.g. a scanner with OCR/OMR software) has a calibrated recognition sensitivity and an algorithm for calculation and analysis of error frequencies. Further embodiments are set forth in the accompanying claims.

### BRIEF DESCRIPTION OF THE DRAWINGS

The invention will now be described in detail with reference to the accompanying drawings, in which:
Fig. 1 shows a test pattern for facsimile printouts;
Fig. 2 shows an example of a set of test patterns; and
Fig. 3 shows an example of an analysis of misinterpretations.

### DETAILED DESCRIPTION OF THE PREFERRED EMBODIMENTS OF THE INVENTION

The present invention provides means for objective measurement of picture quality, mainly comprising an optical recognition equipment and test patterns. The optical recognition equipment, e.g. a scanner with OCR/OMR software, has a calibrated recognition sensitivity and an algorithm for calculation and analysis of error frequencies. The recognition degree is high when the picture quality is high. The recognition degree should be sufficiently low when the picture quality is low. The test patterns contain information in various directions such that the picture quality can be assessed in its entirety.

The following examples illustrate the construction and the use of the invention.

Example 1. In microfilming it is common that the first picture frame is a photograph of a standardized test picture. After development the photographed test picture is enlarged and it is examined with respect to its reproduction in an acceptable way in the filming process. Using the present invention the quality control may be performed automatically and in an objective way.

Example 2. Scanning a document for optical storage requires that the scanning equipment continuously is adjusted to enable optimal recording of e.g. lead pencil writing mixed with ballpoint pen writing and typewritten text. Using the present invention the quality control can be performed directly and automatically control the scanning equipment setting parameters to obtain optimal picture quality.

Example 3. In transmitting still pictures over the telephone network a picture telephone user using the present invention can establish if the picture quality of the document display equipment will be acceptable with ISDN coded transmission. The transmitting party can print using a video printer before a transmission a test pattern reproduction "frozen" in the document camera. Then the printout is input in the pattern recognition equipment in which it is scanned and characterized in accordance with the software selected, e.g. "57 % recognition degree in ISDN transmission of text having the typeface X and the character size Y".

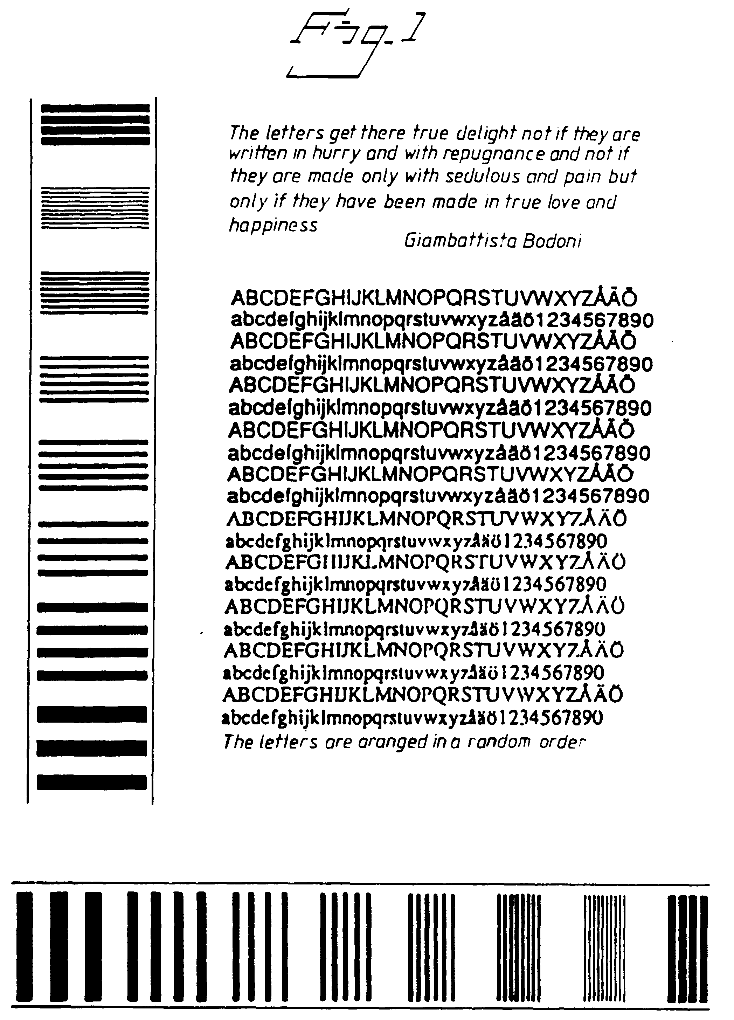

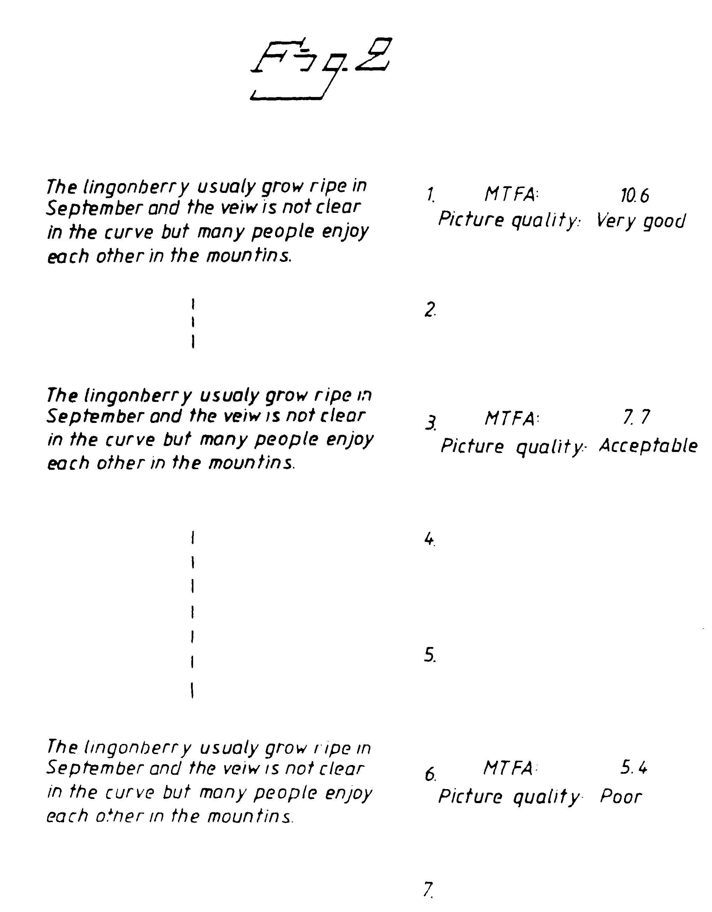

Example 4. Telefax printouts may have different resolution in the horizontal and vertical direction. In order to characterize the resolution of telefax printouts an applicable test pattern is needed containing spatial information in both directions, as is shown in Fig. 1. To characterize readability of telefax printouts, on one hand, an adapted recognition sensitivity is required, and, on the other hand, an algorithm for prognostic calculation and analysis of misinterpreted elements. Calibration of sensitivity and recognition degree is in this case performed by means of a set of test patterns with well-defined physical test results, as is shown in Fig. 2.

The test patterns made with precision in laboratory environment, consist of a series of pictures having one and the same subject, e.g. a picture or a text, having varying picture quality. Each test pattern of the series is characterized, on one hand, by an objective picture quality measure, e.g. MTFA (Modulation Transfer Function Area), and on the other hand, by a subjective measure expressed as quality judgements as e.g. "excellent", "good", "acceptable", "poor" or "very poor". By means of a series of such test patterns a picture produced by means of any reproduction medium can be graded with respect to objective as well as subjective picture quality.

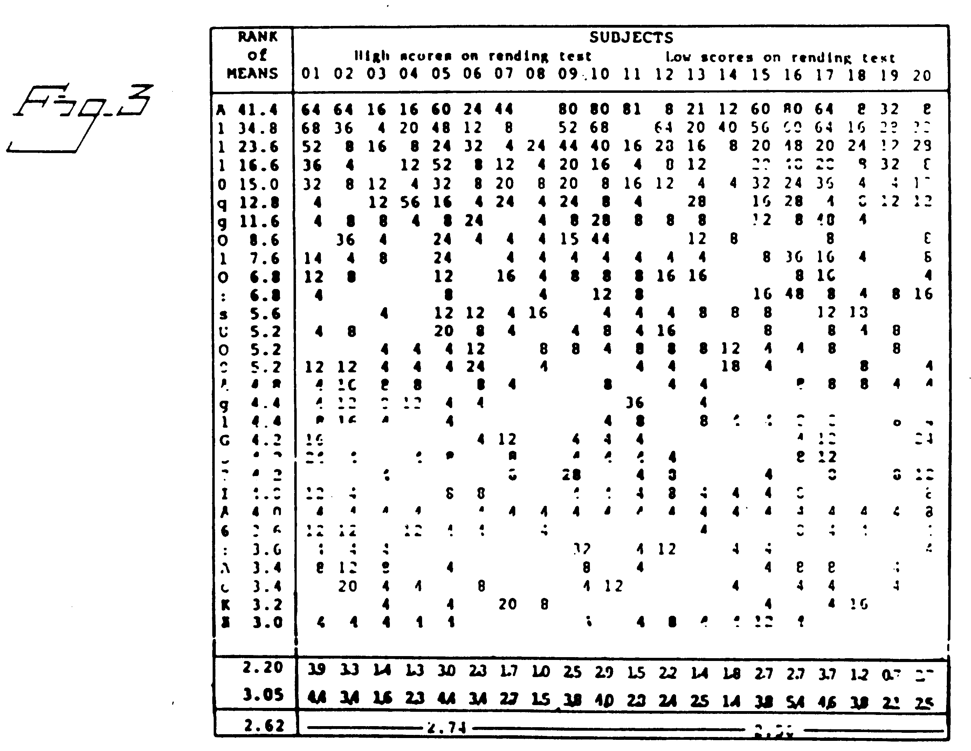

The prognostic analysis of the misinterpretation may appear as in Fig. 3, showing error frequencies in a readability test of a standard picture (Tele Nova Compis; normal face) and a test picture (IBM PC Color; bold face). The total average includes data of all 70 characters, but in the figure only values are shown for characters having an average error frequency greater than 3 % (100 % = 25 errors).

Example 5. The picture quality of a closed picture communication system can be monitored using the present invention and tested by the transmission side periodically transmitting a test picture known to the receiving side, which picture is analyzed there providing quality judgements to the receiving side. The same principle can be used in networks by several users and in open systems provided that the user collective has an internal standardized test pattern and associated test pattern analysis programs. A "quality hand-shake" is obtained if the picture quality analysis is combined with automatic choice of e.g. channel band width in the ISDN network.

Thus, the present invention provides means automatically achieving an objective measurement of the quality of a picture or text. Specifically, values of the quality parameters readability and resolution are obtained. A measurement of the likelihood of misinterpreting a picture is obtained.

A person skilled in the art appreciates that the invention may be applied in several different ways. The examples above are not a complete recitation. The invention is only limited by the claims below.

## Claims

1. A method for objective measurement of picture quality of reproduction media using optical pattern recognition, **characterized** in that a pattern recognition equipment together with test patterns are used to objectively measure and read the quality parameters readability and resolution of a picture or text wherein calibration of sensitivity and recognition degree is performed by means of said test patterns with well-defined physical test results, wherein by means of said test patterns said picture or text produced by said reproduction media can be graded with respect to objective as well as subjective picture quality.

2. A method according to claim 1, **characterized** in that measurement and characterization of the quality parameters, readability and resolution of a picture or text are performed by prognostic calculation and analysis of misinterpreted elements.

3. A method according to claim 1, **characterized** in that the pattern recognition equipment with the test pattern, in dependence of the field of application, is adapted and calibrated with respect to recognition sensitivity and degree.

4. A method according to claim 1, **characterized** in that adaptation and calibration of the recognition sensitivity and degree is applied to a series of physical or electronical test patterns containing pictures and/or texts with varying and physically well-defined test results and the corresponding subjective expressions.

## Patentansprüche

1. Verfahren zum objektiven Messen von Bildqualität von Wiedergabemedien unter Verwendung von optischer Mustererkennung, dadurch gekennzeichnet, daß eine Mustererkennungsausrüstung zusammen mit Testmustern verwendet wird, um die Qualitätsparameter Lesbarkeit und Auflösung eines Bildes oder Textes objektiv zu messen und lesen, wobei die Kalibrierung der Empfindlichkeit und des Erkennungsgrades mit Hilfe der Testmuster mit wohldefinierten physikalischen Testergebnissen durchgeführt wird, wobei mit Hilfe der Testmuster das Bild oder der Text, der durch die Wiedergabemedien erzeugt wird, in bezug auf objektive und auch subjektive Bildqualität eingestuft werden kann.

2. Verfahren nach Anspruch 1, dadurch gekennzeichnet, daß Messung und Charakterisierung der Qualitätsparameter Lesbarkeit und Auflösung eines Bildes oder Textes durch vorausschauende Berechnung und Analyse von fehlinterpretierten Elementen durchgeführt werden.

3. Verfahren nach Anspruch 1, dadurch gekennzeichnet, daß die Mustererkennungsausrüstung mit dem Testmuster in Abhängigkeit vom Anwendungsgebiet in bezug auf Erkennungsempfindlichkeit und Erkennungsgrad angepaßt und kalibriert ist.

4. Verfahren nach Anspruch 1, dadurch gekennzeichnet, daß Anpassung und Kalibrierung der Erkennungsempfindlichkeit und des Erkennungsgrades auf eine Reihe von physikalischen oder elektronischen Testmustern angewendet wird, die Bilder und/oder Texte mit sich ändernden und physikalisch wohldefinierten Testergebnissen und den entsprechenden subjektiven Ausdrücken aufweisen.

## Revendications

1. Procédé pour la mesure objective de la qualité d'image d'un support de reproduction, au moyen d'une reconnaissance optique des structures, caractérisé en ce qu'on utilise un équipement de reconnaissance des structures en association avec des structures d'essai pour mesurer objectivement et lire les paramètres de qualité, de lisibilité et de résolution d'une image ou d'un texte, l'étalonnage de la sensibilité et du degré de reconnaissance est effectué au moyen desdites structures d'essai avec des résultats d'essai physique bien définis , et, au moyen des dites structures d'essai, on peut classer ladite image ou ledit texte produit par ledit support de reproduction, en ce qui concerne la qualité d'image objective et également subjective.

2. Procédé suivant la revendication 1, caractérisé en ce que la mesure et la caractérisation des paramètres de qualité, de la lisibilité et de la résolution d'une image ou d'un texte sont effectuées par calcul de pronostic et analyse des éléments mal interprétés.

3. Procédé suivant la revendication 1, caractérisé en ce que l'équipement de reconnaissance des structures ainsi que la structure d'essai , en fonction du domaine d'application, est prévu et étalonné en ce qui concerne la sensibilité et le degré de reconnaissance.

4. Procédé suivant la revendication 1, caractérisé en ce que l'adaptation et l'étalonnage de la sensibilité et du degré de reconnaissance sont appliqués à une série de structures d'essai physiques ou électroniques contenant des images et/ou des textes avec des résultats d'essai variables et physiquement bien définis et les expressions subjectives correspondantes.
